# FASCICULE DE BREVET EUROPEEN

(11) **EP 2 161 197 B1**
(45) Date de publication et mention de la délivrance du brevet: **13.07.2011**
(21) Numéro de dépôt: 09167735.1
(22) Date de dépôt: 12.08.2009
(51) Int. Cl.: G08G 5/00, G08G 5/04

(54) **Dispositif de visualisation pour aéronef comprenant des moyens d'alarmes sonores représentatifs d'aéronefs présentant un risque de collision**
Anzeigevorrichtung für Flugzeug mit Einrichtung zur Ausgabe eines akustischen Alarms, der auf ein Kollisionsrisiko darstellende Flugzeuge hinweist
Display device for aircraft comprising means for outputting an acoustic alarm concerning aircraft representing a collision risk

(30) Priorité: 09.09.2008 FR 0804950
(43) Date de publication de la demande: 10.03.2010
(73) Titulaire: Thales, 92200 Neuilly Sur Seine (FR)
(72) Inventeur: Nouvel, Christian, 33700 Mérignac (FR); Bacabara, Corinne, 31770 Colomiers (FR); Perbet, Jean-Noël, 33320 Eysines (FR)
(74) Mandataire: Bréda, Jean-Marc

(56) Documents cités:
- EP-A- 0 609 162
- WO-A-2007/002917
- GB-A- 2 408 492
- US-A1- 2006 287 829

## Description

Le domaine général de l'invention est celui des systèmes anti-collision pour aéronef et plus particulièrement celui de la présentation des informations d'anti-collision.

Pour un aéronef en vol, il est fondamental de connaître très précisément les aéronefs situés dans son environnement immédiat afin d'éviter tout risque de collision. Ce problème est particulièrement crucial dans un certain nombre d'applications où les aéronefs sont amenés à voler à basse altitude avec des conditions de visibilité réduites. Historiquement, dès les années 1960-1970, une solution indépendante du contrôle de trafic aérien (Air Traffic Control) s'est progressivement dégagée. Cette solution est connue sous le nom de TCAS acronyme de « Traffic alert and Collision Avoidance System ».

Aujourd'hui, plusieurs familles de TCAS co-existent :
- La première génération dite TCAS I fournit uniquement des alertes de type « Traffic Advisory » (TA) de proximité d'intrus, mobiles présentant un risque pour l'aéronef tel qu'un autre avion... II est essentiellement utilisé dans l'aviation générale, c'est à dire le domaine des petits avions.
- Le TCAS II fournit des alertes de proximité d'intrus de type TA et aussi des résolutions de conflits en proposant au pilote des manoeuvres d'évitement. Le mode de fonctionnement se nomme RA pour « Resolution Advisory ». Ces manoeuvres d'évitement s'effectuent dans un plan vertical par une montée ou une descente. II est essentiellement utilisé dans l'aviation commerciale. Le TCAS II a été rendu obligatoire dans les années 1990 sur les avions de ligne.
- Le TCAS III encore en développement, est une amélioration du TCAS II permettant en plus une résolution des conflits (RA) dans le plan horizontal par des manoeuvres de virage à gauche ou à droite.

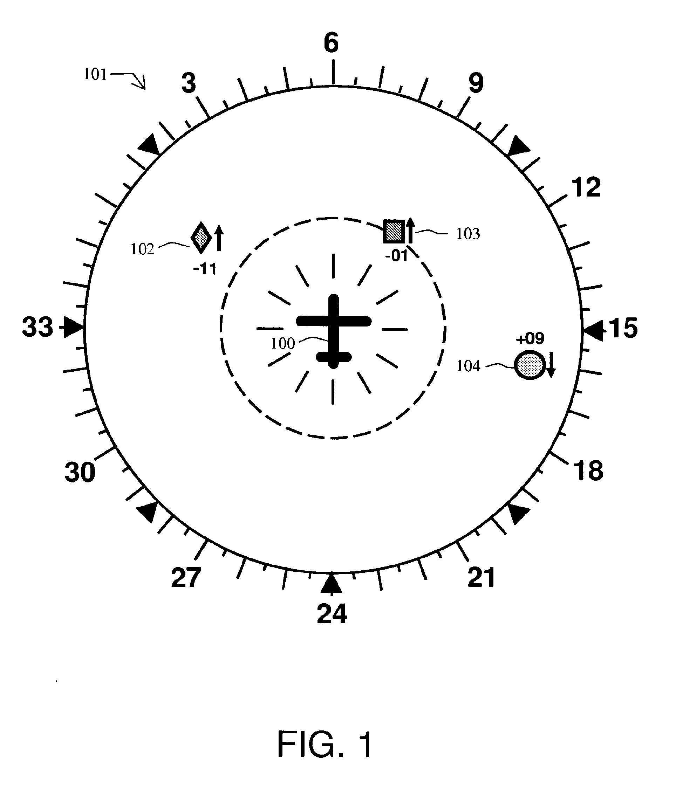

La présentation des informations au pilote est maintenant bien connue. A titre d'exemple, la figure 1 montre la présentation des intrus sur un écran de type ND (Navigation Display). La présentation des intrus s'effectue dans un plan horizontal 2D relativement à l'aéronef 100 en mode dit « ROSE » pour rose des caps. L'aéronef 100 occupe le centre de la « ROSE » 101 représentée par un cercle gradué. La forme et la couleur des intrus sont différentes selon leur degré de danger associé et selon le monde de fonctionnement du TCAS.

A titre d'exemples, l'aéronef 102 est proche, à une altitude relative de 1100 pieds sous l'aéronef 100, altitude relative symbolisée par l'indication « -11 ». Cet aéronef est en montée, symbolisé par une flèche montante sur la figure 1. Il est figuré par un losange plein de couleur blanche ou cyan représentant une menace en mode dit PT pour « Proximate Traffic ». Selon les conventions aéronautiques, lorsque le losange est plein, la menace est de type PT, si le losange est vide, alors la menace est de type OT, signifiant « Other Traffic ».

L'aéronef 103 est une menace en mode RA pour « Resolution Advisory ». Il est situé à une altitude relative de 100 pieds sous l'aéronef 100 et en montée. La couleur du carré qui le représente est le rouge.

L'aéronef 104 est un intrus en mode TA pour « Traffic Advisory », il est 900 pieds au-dessus de l'aéronef 100 et en descente. La couleur du cercle qui le représente est l'ambre.

Comme on peut le voir, l'interprétation des informations par le pilote est loin d'être immédiate, ce qui peut se révéler particulièrement dangereux en cas de risque de collision imminent.

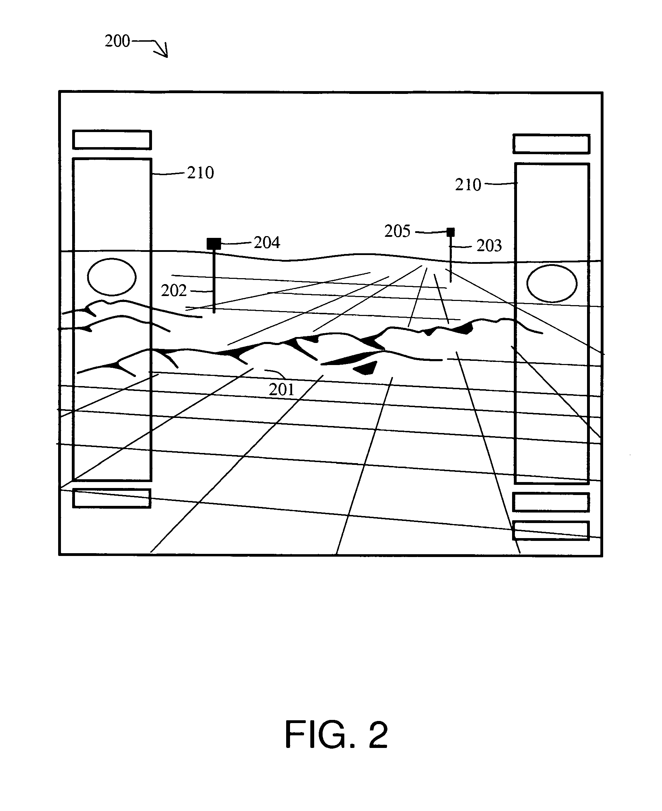

Les nouveaux systèmes de vision synthétique de type SVS (Synthetic Vision System) permettent actuellement aux pilotes d'avoir une représentation synthétique du monde extérieur et donc, une meilleure conscience des dangers environnants tels que les collisions avec le sol sans perte de contrôle communément appelées CFIT (Controlled Flight Into Terrain). Ces systèmes SVS permettent actuellement d'afficher en 3D un terrain synthétique ainsi que les obstacles naturels ou artificiels (immeubles...). Une amélioration de la présentation des informations fournies par le TCAS, a été proposée dans la demande de brevet d'Honeywell intitulé «Perspective View Conformal Traffic Target Display» publié sous le numéro international W02007/002917A1. La figure 2 montre un exemple de présentation des intrus sur un écran 200 de type PFD pour « Primary Flight Display » selon les dispositions de cette demande. La présentation des intrus s'effectue en 3D de manière conforme, c'est à dire positionnés à leur emplacement réel dans le paysage. Des informations complémentaires sont associées aux intrus pour aider le pilote à situer leur position, au-dessus ou en dessous d'une altitude de référence et leur degré d'éloignement obtenu grâce à une variation de grosseur des symboles. La figure 2 présente dans une vue synthétique conforme 3D du terrain 201 le trafic aérien. Cette vue comporte également une représentation 210 des informations du PFD. Les intrus sont présentés dans le secteur frontal de l'avion. Les intrus 204 et 205 sont représentés par des carrés plus ou moins grands selon leur distance relative à l'avion. D'autres symboles sont ajoutés pour aider le pilote à interpréter l'altitude relative de l'intrus par rapport à l'avion. Ainsi, les symboles 202 et 203 représentants des mâts verticaux donnent la position et la hauteur des intrus au-dessus du sol. Cette présentation est bien adaptée aux avions de ligne qui volent relativement à haute altitude.

Bien que les nouveaux systèmes SVS permettent de mieux faire comprendre au pilote, la situation des intrus, en particulier leur type, leur positionnement, leur comportement, leurs performances..., ces nouveaux systèmes sont insuffisants pour accomplir des missions à basse altitude. En effet, les intrus sont très rares pour les avions de lignes en vol aux instruments, qui suivent des plans de vols préétablis dans des couloirs aériens stricts et sont contrôlés par les organismes de la circulation aérienne avec des radars. Par contre, des hélicoptères ou des petits avions peuvent voler nombreux en basse altitude, par exemple, pour participer à un sauvetage d'un grand nombre de victimes, dans le cadre d'un plan « rouge » ou dans le cadre de missions de prévention civile.

Dans ce cas, le vol est essentiellement à vue, sans plan de vol établi et/ou hors d'une couverture radar classique. Les conditions de visibilité peuvent se dégrader en cas de vol de nuit, de soleil de face, de présence de fumée pour des missions incendie,....Les aéronefs ont aussi des trajectoires plus dynamiques et plus variées (mises en virage, montées, descentes,...) que celles des avions de ligne. Dans ces conditions, il est particulièrement important de bien faire comprendre au pilote le degré de dangerosité des intrus de la façon la plus intuitive possible.

Il est connu de GB 2 408 492 A qu'une alarme sonore est générée par un synthétiseur de fréquences couplé à un haut-parleur, la fréquence du son représentant la distance entre le premier et le second aéronef.

Le but de l'invention est d'utiliser, parallèlement à la présentation traditionnelle des intrus sur les écrans de visualisation de bord, des alarmes sonores représentatives des intrus et des dangers qu'ils représentent, certains paramètres de ces alarmes apparaissant sur les écrans de visualisation de façon à sensibiliser le mieux possible le pilote au danger potentiel représenté par l'intrus.

Plus précisément, l'invention a pour objet un système de visualisation de type à vision synthétique SVS, pour un premier aéronef, ledit système comprenant au moins des capteurs de position dudit aéronef, un système de détection du trafic aérien calculant la position et la dangerosité d'au moins un second aéronef présentant un risque de collision avec ledit premier aéronef à partir de données issues de capteurs de reconnaissance, un calculateur électronique, un moyen d'interface homme-machine et un écran d'affichage, le calculateur comprenant des moyens de traitement des différentes informations issues des capteurs et du moyen d'interface, caractérisé en ce que le système comporte également un synthétiseur de fréquences couplé à au moins un haut-parleur, agencés de façon que, lorsque le second aéronef se trouve à une distance du premier aéronef inférieure à une distance de sécurité, le synthétiseur génère une alarme sonore représentative d'au moins un des paramètres dudit second aéronef.

Selon l'invention le paramètre du second aéronef est le type, la catégorie, la taille ou la vitesse relative du second aéronef ou un son caractéristique dudit aéronef. De plus, lorsque le paramètre est la vitesse relative du second aéronef, la fréquence de l'alarme sonore est modulée de façon à simuler un effet Doppler.

Avantageusement, l'écran d'affichage comporte une symbologie représentative du fonctionnement ou de l'état du synthétiseur de fréquences. De plus, lorsque l'écran affiche une représentation bidimensionnelle ou tridimensionnelle de l'espace environnant le premier aéronef, les frontières spatiales entre lesquelles une alarme est susceptible d'être émise sont représentées en vue conforme.

Enfin, lorsque plusieurs seconds aéronefs présentent un risque de collision avec le premier aéronef, le calculateur comporte des moyens permettant de déterminer le second aéronef présentant le danger le plus élevé, l'alarme sonore étant représentative de cedit second aéronef.

L'invention sera mieux comprise et d'autres avantages apparaîtront à la lecture de la description qui va suivre donnée à titre non limitatif et grâce aux figures annexées parmi lesquelles :
La figure 1 représente une première présentation des informations de type TCAS selon l'art antérieur ;
La figure 2 représente une seconde présentation des informations de type TCAS selon l'art antérieur ;
La figure 3 représente le diagramme d'un système de visualisation selon l'invention ;
La figure 4 représente une vue d'ensemble d'un affichage de type TCAS selon l'invention.

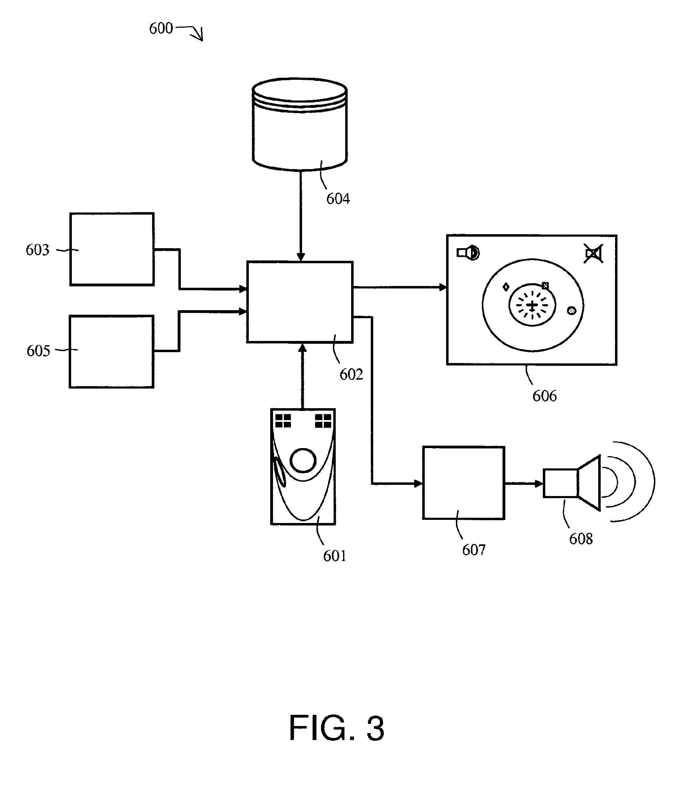

La figure 3 représente un exemple d'architecture du système, objet de l'invention, monté sur un premier aéronef. Les autres aéronefs situés dans l'espace proche de ce premier aéronef seront appelés dans la suite de la description aéronefs intrus ou plus simplement intrus.

Cet exemple de système d'affichage graphique 600 regroupe un processeur 602 configuré pour fournir à l'écran 606 les informations à afficher. Une ou plusieurs sources de données sont reliées au processeur 602. Ces sources de données incluent une base de données terrain 604 utilisée pour le tracé de la vue perspective, des capteurs de positionnement 603 de l'avion, des systèmes de détection du trafic aérien, détecteurs d'intrus 605, un synthétiseur de fréquences 607 couplé à au moins un haut-parleur 608, des moyens de contrôle 601 pour la présentation des informations au pilote.

Les bases de données sont généralement positionnées dans l'aéronef. Les données peuvent également provenir du sol par des moyens de transmission ou « data link ». De plus, ces données peuvent être stockées sur différents périphériques tels que des disquettes, des disques durs, des CD-ROM, des mémoires volatiles, des mémoires non volatiles, des RAM ou tous autres moyens permettant le stockage de données.

Le système d'affichage comprend également des moyens d'interface homme machine et de contrôle 601. Ces moyens sont, par exemple, comme représenté sur la figure 3, des postes de commande classiques, la commande étant effectuée grâce à des boutons, des surfaces tactiles,....ou des CCD (Cursor Control Device), moyens proches des « souris » informatiques.

Le processeur 602 est interfacé avec des composants hardware qui fournissent un rendu graphique. Par exemple, ces composants hardware sont un ou plusieurs microprocesseurs, des mémoires, des appareils de stockage, des cartes d'interfaces ou tous autres composants standards. De plus, le processeur 602 fonctionne avec des logiciels ou « software » ou des micro-logiciels ou « firmware ». Il est capable de lire des instructions machine pour réaliser diverses tâches, calculs et fonctions de contrôle et générer les signaux à afficher et les autres données utilisés par l'écran d'affichage. Ces instructions peuvent être stockées sur des disquettes, des disques durs, des CD-ROM, des mémoires volatiles, des mémoires non volatiles, des RAM ou tous autres moyens permettant le stockage de données. Tous ces moyens sont connus de l'homme du métier.

Le processeur 602 fournit les données à afficher aux écrans d'affichage 606. Ces données comprennent au moins :
- La position en latitude/longitude, la vitesse, le cap, ...de l'aéronef à partir de la localisation courante de l'aéronef issue des capteurs de position 603 ;
- La position relative des intrus fournie par le système de détection du trafic aérien 605 ;
- Eventuellement, des informations provenant des bases de données terrain 604.

Le processeur 602 est configuré pour recevoir et calculer les données avion à savoir la localisation courante de l'aéronef issue des capteurs de position 603 qui peuvent être une centrale à inertie, un système de type GPS, ....

Les systèmes de détection du trafic 605 sont constitués par au moins un système TCAS. Ils peuvent être également des systèmes de type ADS-B (Automatic Dependent Surveillance Broadcast) ou TIS-B (Traffic Information Service Broadcast) ou un « Traffic Computer » qui fusionnent les données issues du TCAS ou de l'ADS-B. Optionnellement, les données peuvent être fournies par une liaison numérique de type « Datalink ». Ces systèmes trafic peuvent fournir la position des intrus, les types des intrus (hélicoptères, avions, autres), leur vitesse,....

Le processeur 602 est configuré pour recevoir les informations, vérifier leur cohérence, ou encore mémoriser de façon historique, par exemple, les dernières positions de chaque intrus et prédire la trajectoire future sur un délai court. Le nombre de valeurs mémorisées est paramétrable.

Les intrus visibles dans le secteur frontal peuvent être présentés en vue conforme 3D sur un écran de pilotage de type PFD (Primary Flight Display) ou en vue bidimensionnelle ou tridimensionnelle sur un écran de pilotage de type ND (Navigation Display).

De plus, le système comporte un synthétiseur de fréquences 607 couplé à au moins un haut-parleur 608, objets de l'invention et agencés de façon que, lorsqu'un intrus se trouve à une distance du premier aéronef inférieure à une distance de sécurité, le synthétiseur génère une alarme sonore représentative d'au moins un des paramètres dudit second aéronef.

Lorsqu'un intrus se rapproche de l'avion dans un délai de l'ordre de 30 secondes, le processeur calcule les fréquences limites du son émis par l'alarme, la loi de variation et le timbre du son. Le pilote peut ainsi facilement reconnaître et différentier un hélicoptère, un petit ou un gros avion.... Ainsi, lorsque l'aéronef est un hélicoptère, l'alarme sonore reproduira le bruit des pales en rotation. Ce signal sonore dépend de façon non exhaustive du type de l'intrus, de sa taille, de sa vitesse, de ses capacités de manoeuvre.

La mise en marche du synthétiseur de fréquences 607 et le réglage du volume sonore sur les haut-parleurs 608 se font par sélection de l'utilisateur à partir du panneau de commande 601. Les haut-parleurs 608 sont soit disposés dans le cockpit, soit intégrés dans un casque si l'environnement sonore de la cabine est trop bruyant.

Le réglage de la valeur des fréquences minimum et maximum pour simuler l'effet sonore et les modes de calcul des incréments de fréquence qui peuvent être des lois linéaires ou non linéaires se font aussi par sélection de l'utilisateur à partir du panneau de commande 601.

L'alarme sonore peut être aussi une succession de bips sonores dont l'écart temporel varie avec la vitesse du mobile par rapport à l'aéronef ou encore avoir une fréquence allant vers les aigus pour les intrus se rapprochant de l'aéronef ou vers les graves pour les objets s'éloignant, de façon à imiter l'effet Doppler d'un mobile en mouvement.

Dans le cas où plusieurs intrus sont dans le champ de l'aéronef, une logique permet de déterminer celui présentant le danger le plus élevé, et ainsi de sélectionner l'intrus nécessitant une alarme multimodale prioritaire.

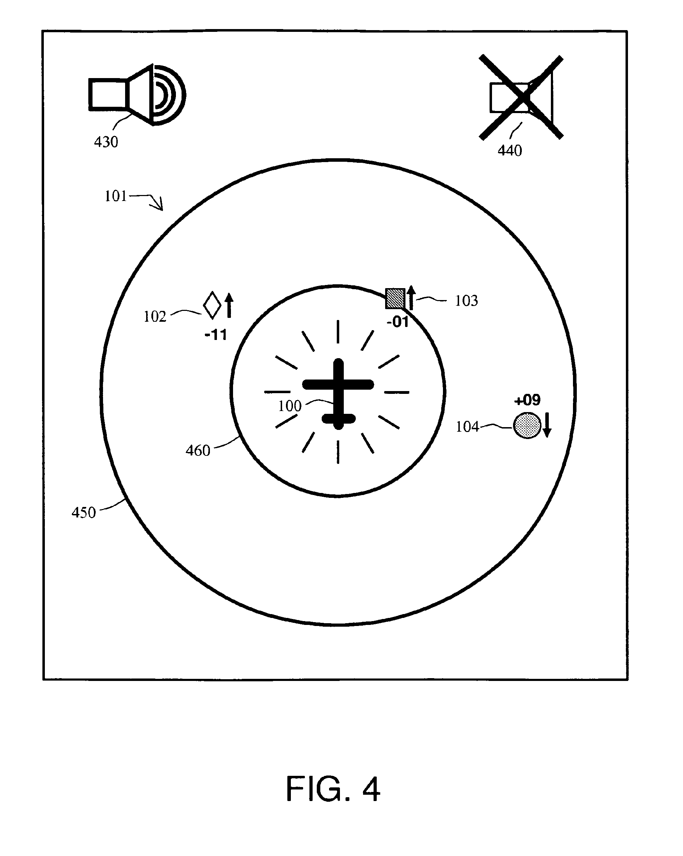

Il est intéressant de coupler les alarmes sonores avec des indications visuelles présentées sur les écrans de visualisation. Ainsi, la figure 4 représente des intrus sur un écran de type ND (Navigation Display). La présentation des intrus s'effectue dans un plan horizontal 2D relativement à l'aéronef 100 en mode dit « ROSE » dans une représentation équivalente à celle de la figure 1.

La figure 4 comporte en outre de nouveaux symboles représentatifs des alarmes sonores et qui sont représentés en traits gras. Ainsi, les symboles 430 et 440 représentant un haut-parleur en marche ou à l'arrêt indiquent le fonctionnement possible des sons fournis par le synthétiseur de fréquences. Les cercles 450 et 460 indiquent les limites de la variation de la fréquence du son.

## Revendications

1. Système de visualisation de type à vision synthétique SVS (600), pour un premier aéronef, ledit système comprenant au moins des capteurs de position dudit aéronef (603), un système de détection du trafic aérien (605) calculant la position et la dangerosité d'au moins un second aéronef présentant un risque de collision avec ledit premier aéronef à partir de données issues de capteurs de reconnaissance, un calculateur électronique (602), un moyen d'interface homme-machine (601) et un écran d'affichage (606), le calculateur comprenant des moyens de traitement des différentes informations issues des capteurs et du moyen d'interface, **caractérisé en ce que** le système comporte également un synthétiseur de fréquences (607) couplé à au moins un haut-parleur (608), agencés de façon que, lorsque le second aéronef se trouve à une distance du premier aéronef inférieure à une distance de sécurité, le synthétiseur génère une alarme sonore représentative d'au moins un des paramètres dudit second aéronef, ledit paramètre étant soit le type, la catégorie ou la taille du second aéronef ou un son caractéristique dudit aéronef.

2. Système de visualisation selon la revendication 1, **caractérisé en ce que** le paramètre du second aéronef est la vitesse relative du second aéronef.

3. Système de visualisation selon la revendication 2, **caractérisé en ce que**, lorsque le paramètre est la vitesse relative du second aéronef, la fréquence de l'alarme sonore est modulée de façon à simuler un effet Doppler.

4. Système de visualisation selon la revendication 1, **caractérisé en ce que** l'écran d'affichage (606) comporte une symbologie (430, 440) représentative du fonctionnement ou de l'état du synthétiseur de fréquences.

5. Système de visualisation selon la revendication 4, **caractérisé en ce que**, lorsque l'écran affiche une représentation bidimensionnelle ou tridimensionnelle de l'espace environnant le premier aéronef, les frontières spatiales (450, 460).entre lesquelles une alarme est susceptible d'être émise sont représentées en vue conforme,

6. Système de visualisation selon l'une des revendications précédentes, **caractérisé en ce que**, plusieurs seconds aéronefs présentent un risque de collision avec le premier aéronef, le calculateur comporte des moyens permettant de déterminer le second aéronef présentant le danger le plus élevé, l'alarme sonore étant représentative de cedit second aéronef.

## Claims

1. A synthetic vision type viewing system SVS (600) for a first aircraft, said system comprising at least sensors for the position of said aircraft (603), a system for detecting air traffic (605) for calculating the position and the danger posed by at least one second aircraft presenting a risk of collision with said first aircraft based on data originating from recognition sensors, an electronic calculator (602), a man-machine interface means (601) and a display screen (606), the calculator comprising means for processing the different information originating from the sensors and the interface means, **characterised in that** the system further comprises a frequency synthesiser (607) coupled to at least one speaker (608) arranged so that, when the second aircraft is at a distance from the first aircraft that is below a safe distance, said synthesiser generates an audible alarm representing at least one of the parameters of said second aircraft, said parameter being either the type, the category or the size of the second aircraft, or a sound that is characteristic of said aircraft.

2. The viewing system according to claim 1, **characterised in that** the parameter of the second aircraft is the relative speed of said second aircraft.

3. The viewing system according to claim 2, **characterised in that**, when the parameter is the relative speed of the second aircraft, the frequency of the audible alarm is modulated so as to simulate a Doppler effect.

4. The viewing system according to claim 1, **characterised in that** the display screen (606) comprises a symbology (430, 440) representing the operation or the status of the frequency synthesiser.

5. The viewing system according to claim 4, **characterised in that**, when the screen displays a two-dimensional or a three-dimensional representation of the area around the first aircraft, the spatial boundaries (450, 460) between which an alarm is likely to be emitted are represented in a corresponding view.

6. The viewing system according to any one of the preceding claims, **characterised in that**, when several second aircrafts present a risk of collision with the first aircraft, the calculator comprises means for determining the second aircraft presenting the greatest danger, the audible alarm representing said second aircraft.

## Patentansprüche

1. Anzeigesystem durch synthetisches Sichtsystem SVS (600) für ein erstes Luftfahrzeug, wobei das System wenigstens Folgendes umfasst: Sensoren für die Position des Luftfahrzeugs (603), ein System zum Erkennen vom Flugverkehr (605), das die Position und die Gefährlichkeit wenigstens eines zweiten Luftfahrzeugs, das ein Kollisionsrisiko für das erste Luftfahrzeug darstellt, auf der Basis von Daten von Erkennungssensoren berechnet, einen elektronischen Rechner (602), ein Mensch-Maschine-Schnittstellenmittel (601) und einen Anzeigeschirm (606), wobei der Rechner Mittel zum Verarbeiten der verschiedenen von den Sensoren und dem Schnittstellenmittel kommenden Informationen umfasst, **dadurch gekennzeichnet, dass** das System ferner einen Frequenz-Synthesizer (607) umfasst, der mit wenigstens einem Lautsprecher (608) gekoppelt ist, der so ausgelegt ist, dass der Synthesizer, wenn der Abstand des zweiten Luftfahrzeugs von dem ersten Luftfahrzeug geringer ist als ein Sicherheitsabstand, einen akustischen Alarm erzeugt, der wenigstens einen der Parameter des zweiten Luftfahrzeugs repräsentiert, wobei dieser Parameter entweder der Typ, die Kategorie oder die Größe des zweiten Luftfahrzeugs ist, oder ein Ton, der für das Luftfahrzeug charakteristisch ist.

2. Anzeigesystem nach Anspruch 1, **dadurch gekennzeichnet, dass** der Parameter des zweiten Luftfahrzeugs die relative Geschwindigkeit des zweiten Luftfahrzeugs ist.

3. Anzeigesystem nach Anspruch 2, **dadurch gekennzeichnet, dass**, wenn der Parameter die relative Geschwindigkeit des zweiten Luftfahrzeugs ist, die Frequenz des akustischen Alarms moduliert wird, um einen Doppler-Effekt zu simulieren.

4. Anzeigesystem nach Anspruch 1, **dadurch gekennzeichnet, dass** der Anzeigeschirm (606) eine Symbologie (430, 440) umfasst, die den Betrieb oder den Zustand des Frequenz-Synthesizers repräsentiert.

5. Anzeigesystem nach Anspruch 4, **dadurch gekennzeichnet, dass**, wenn der Bildschirm eine zweidimensionale oder eine dreidimensionale Darstellung des Bereichs um das erste Luftfahrzeug anzeigt, die räumlichen Grenzen (450, 460), zwischen denen ein Alarm wahrscheinlich ausgesendet werden wird, in einer konformen Ansicht dargestellt werden.

6. Anzeigesystem nach einem der vorherigen Ansprüche, **dadurch gekennzeichnet, dass** der Rechner, wenn mehrere zweite Luftfahrzeuge ein Kollisionsrisiko für das erste Luftfahrzeug darstellen, Mittel zum Ermitteln des zweiten Luftfahrzeugs umfasst, das die größte Gefahr darstellt, wobei der akustische Alarm dieses zweite Luftfahrzeug repräsentiert.
